# EUROPEAN PATENT SPECIFICATION

(11) **EP 1 662 283 B1**
(45) Date of publication and mention of the grant of the patent: **12.03.2008**
(21) Application number: 05025788.0
(22) Date of filing: 25.11.2005
(51) Int. Cl.: G02B 6/13, G02B 6/122

(54) **Process for producing a film optical waveguide**
Herstellungsverfahren für einen filmartigen optischen Wellenleiter
Procédé de production d'un guide d'ondes optiques transparent

(30) Priority: 30.11.2004 JP 2004346499
(43) Date of publication of application: 31.05.2006
(73) Proprietor: NITTO DENKO CORPORATION, Osaka (JP)
(72) Inventor: Mune, Kazunori, Ibaraki-shi, Osaka (JP); Shimizu, Yusuke, Ibaraki-shi, Osaka (JP); Amino, Ichiro, Ibaraki-shi, Osaka (JP); Mochizuki, Amane, Ibaraki-shi, Osaka (JP)
(74) Representative: Grünecker, Kinkeldey, Stockmair & Schwanhäusser Anwaltssozietät

(56) References cited:
- EP-A- 0 523 514
- US-A- 5 195 162
- US-B1- 6 341 190

## Description

### FIELD OF THE INVENTION

The present invention relates to a process for producing a film optical waveguide for extensive use in optical communication, optical information processing, and other general optical fields.

### BACKGROUND OF THE INVENTION

Optical waveguides are incorporated in optical devices such as optical waveguide devices, optical integrated circuits and optical wiring boards, and are in extensive use in optical communication, optical information processing and other general optical fields. Examples of the optical waveguides includes films having a three-layer structure comprising an undercladding layer, a core layer formed thereon which has a predetermined pattern, and an overcladding layer which surrounds the core layer.

Such film optical waveguides are usually obtained from a film structure having optical-waveguide parts formed therein, by cutting each optical-waveguide part out of the filmy structure with a diamond blade (rotating blade containing fine diamond particles dispersed therein).

In the case where the film structure has been formed on a substrate such as, e.g., silicon or quartz, the optical-waveguide parts each are cut out together with the substrate by means of a diamond blade to thereby form optical waveguides (see, for example, patent document 1).
Patent Document 1: JP 2003-172839 A

However, the cutting with a diamond blade has a drawback that it is difficult to secure the smoothness of the cut surfaces. In particular, when the light entrance end face and light emission end face among the cut surfaces have insufficient smoothness, the optical waveguide has impaired light loss characteristics and comes to have a trouble concerning light transmission.

On the other hand, the film optical waveguides are praised because they are flexible and can be incorporated into various optical devices. The film optical waveguides are required to have a contour (cut surfaces in plan view) which includes a curved or polygonal line or the like according to the shapes of optical devices, etc. However, since the diamond blade is a rotating blade, it is applicable only to linear cutting. The only way of obtaining the contour including a curved line or the like is to employ another cutting technique. Because of this, the process for producing film optical waveguides in which optical-waveguide parts each are cut out with a diamond blade has poor production efficiency.

The present inventors hence attempted a method of cutting by punching with a die. As a result, the light entrance end faces and light emission end faces made by such cutting could not have sufficiently improved smoothness although the production efficiency was improved.

US 5 195 162 discloses various method for cutting of optical waveguides such as die-punching and laser-cutting. US 6 341 190 describes a method using laser-cutting of optical waveguides.

### SUMMARY OF THE INVENTION

The present invention has been made in view of the foregoing circumstances.

Accordingly, an object of the invention is to provide a process for film-optical-waveguide production by which film optical waveguides showing satisfactory light transmission can be efficiently produced.

Other objects and effects of the invention will become apparent from the following description.

For accomplishing the object, the present invention provides a process for producing a film optical waveguide from a film structure having one or more optical-waveguide parts formed therein, which process comprises:
cutting each optical-waveguide part out of the film structure to thereby form an optical waveguide having a light entrance end face and a light emission end face,
wherein the cutting for making the light entrance end face and the light emission end face is conducted with a laser light and the cutting for making cut surfaces other than said end faces is conducted by punching with a die.

The term "film optical waveguide" as used herein means a thin-film-form multilayer structure having a constitution comprising a core layer which transmits light and a cladding layer which has a lower refractive index than the core layer and surrounds the core layer. Furthermore, the term "light entrance end face" means one end face of an optical waveguide through which light enters the waveguide, while the term "light emission end face" means the other end face(s) of the optical waveguide through which light is emitted from the waveguide.

Based on the results of the above-mentioned test (attempt), the inventors further made extensive investigations on a process for efficiently producing a filmy optical waveguide showing satisfactory light transmission. Namely, investigations were made on a method for cutting a film structure having one or more optical-waveguide parts formed therein so as to cut out each of the optical-waveguide parts. As a result, it was found that when cutting for making a light entrance end face and a light emission end face is conducted with a laser light, then the resultant cut surfaces are in a neatly finished state and have sufficiently improved smoothness and the optical waveguide obtained shows satisfactory light transmission. It was further found that when cutting for making the cut surfaces other than the light entrance end face and light emission end face (such cut surfaces are hereinafter referred to as "waveguide side faces") is conducted by punching with a die, the cutting for making the waveguide side faces can be easily conducted even when the contour of the waveguide side faces includes a curved or polygonal line or the like in a plan view thereof. Thus, it was found that a combination of the cutting with a laser light and the punching with a die secures both the formation of highly precise cut surfaces and the high productivity of optical waveguides, whereby the invention has been achieved.

In the process of the invention for producing a film optical waveguide, when cutting a film structure having one or more optical-waveguide parts formed therein so as to cut each of the optical-waveguide parts out of the filmy structure, the cutting for making a light entrance end face and a light emission end face is conducted with a laser light and the cutting for making waveguide side faces is conducted by punching with a die. Because of this, film optical waveguides showing satisfactory light transmission can be efficiently produced.

### BRIEF DESCRIPTION OF THE DRAWINGS

Fig. 1 is a sectional view diagrammatically illustrating one embodiment of the process of the invention for producing a film optical waveguide.
Fig. 2 is a sectional view diagrammatically illustrating the embodiment of the process for producing a film optical waveguide.
Fig. 3 is a sectional view diagrammatically illustrating the embodiment of the process for producing a film optical waveguide.
Fig. 4 is a sectional view diagrammatically illustrating the embodiment of the process for producing a film optical waveguide.
Fig. 5 is a plan view diagrammatically illustrating an example of the filmy structure for use in the process for producing a film optical waveguide.
Fig. 6 is a plan view diagrammatically illustrating one embodiment of the process for producing a film optical waveguide.
Fig. 7 is a plan view diagrammatically illustrating the embodiment of the process for producing a film optical waveguide.
Fig. 8 is a slant view illustrating an optical waveguide obtained by the embodiment of the process for producing a film optical waveguide.

The reference numerals used in the drawings denote the followings, respectively.
A: Optical waveguide
F: Filmy structure
1: Light entrance end face
2-4: Light emission end face
5-8: Waveguide side face

### DETAILED DESCRIPTION OF THE INVENTION

Embodiments of the invention will be explained below in detail by reference to the drawings.

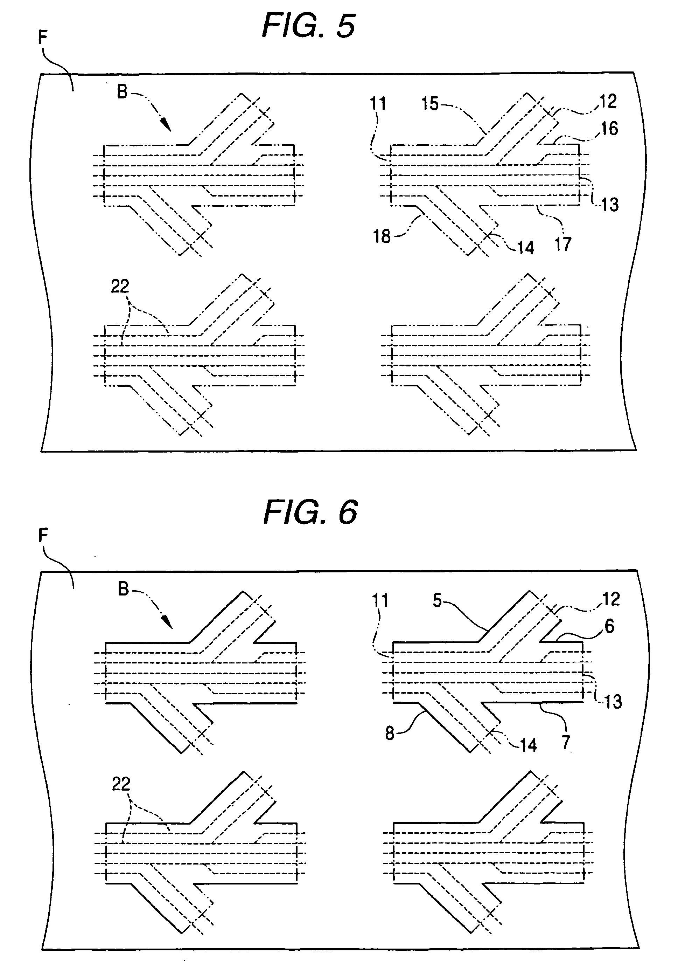

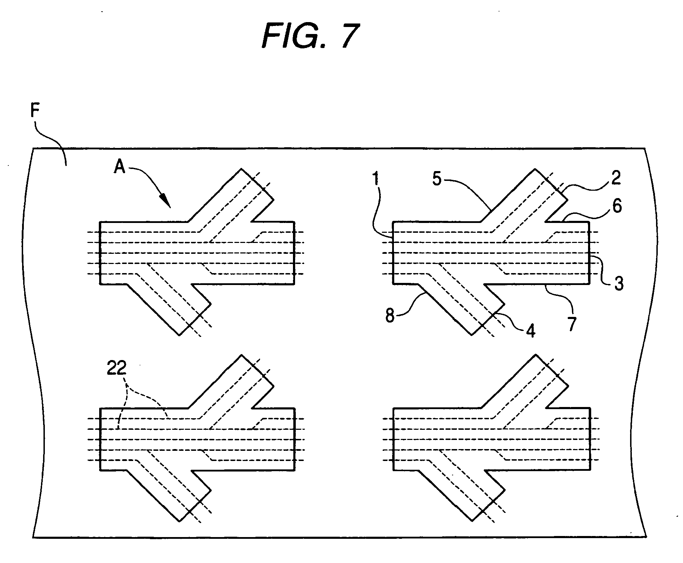

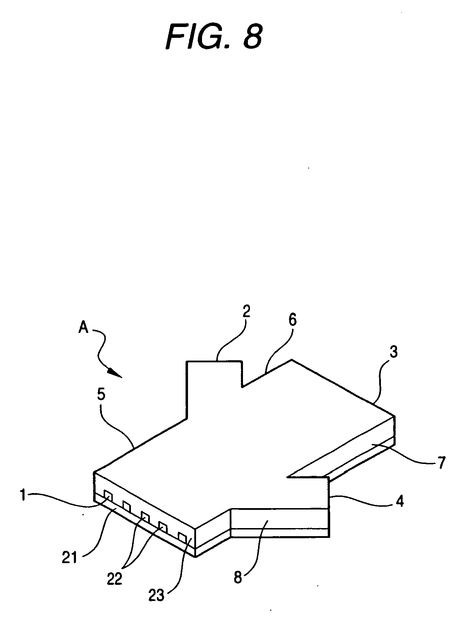

In the process of the invention for producing a film optical waveguide, a film structure F having optical-waveguide parts B formed therein (see Fig. 5) is cut in such a manner that the faces serving as waveguide side faces 5 to 8 of each optical waveguide A (see Fig. 7) are made by punching with a die and the faces serving as a light entrance end face 1 and light emission end faces 2 to 4 of the optical waveguide A (see Fig. 7) are made by cutting with a laser light to thereby obtain a filmy optical waveguide A (see Fig. 8).

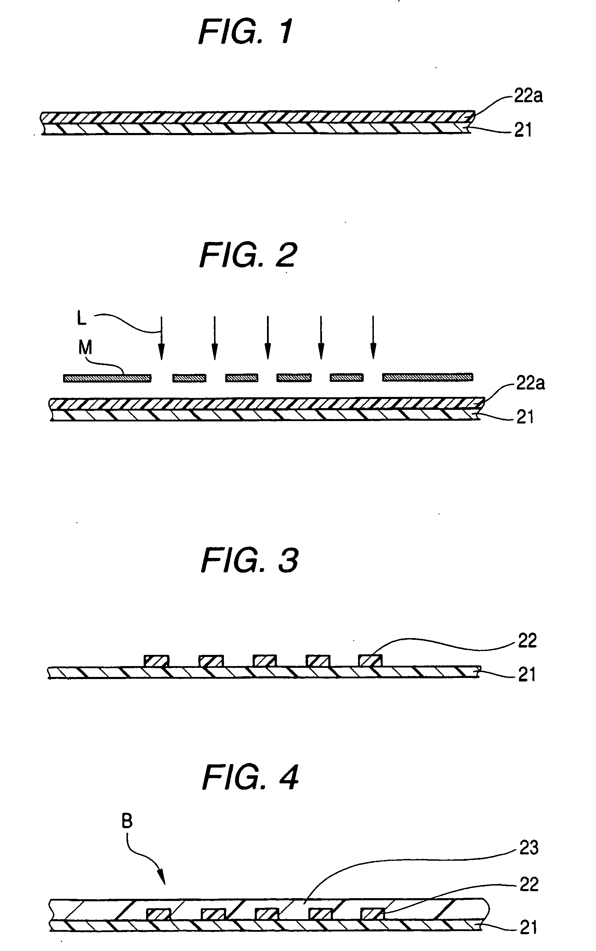

More specifically, the procedure is as follows. First, the film structure F having optical-waveguide parts B formed therein (see Fig. 5) is produced. This film structure F can be produced by a process heretofore in use. Namely, a polyimide resin film for use as an undercladding layer 21 (see Fig. 1) is prepared first. It is preferred that this polyimide resin film have been wound into a roll and be used while being unwound from the roll, so that the subsequent steps of producing the filmy structure F and of cutting out optical-waveguide parts B can be continuously conducted. The thickness of the polyimide resin film (undercladding layer 21) is generally in the range of 1-30 µm, and is preferably in the range of 5-15 µm.

Subsequently, a photosensitive polyimide resin precursor solution (photosensitive poly(amic acid) varnish) which is a material giving a layer having a higher refractive index than the polyimide resin film (undercladding layer 21) is applied on the above-mentioned polyimide resin film (undercladding layer 21) in such an amount as to result in a film thickness after drying of generally 2-30 µm, preferably 6-10 µm, as shown in Fig. 1. This coating layer is predried to form a photosensitive polyimide resin precursor layer 22a which becomes a core layer 22 later (see Fig. 3). Subsequently, a photomask M is placed over the photosensitive polyimide resin precursor layer 22a so as to obtain a desired pattern in each optical-waveguide part B (see Fig. 4), and irradiation with ultraviolet L is carried out onto the layer 22a from above the photomask M as shown in Fig. 2. In the invention, when the exposure amount in the irradiation with ultraviolet L is 5-50 mJ/cm², sufficient resolution can be attained. Thereafter, the heat treatment after exposure which is called post exposure bake (PEB) is conducted in order to complete the photoreaction, and then development with a developing solution (wet processing technique) is conducted. A heat treatment is usually conducted in order to imidize the desired pattern thus obtained through the development. This treatment is performed at a temperature of generally 300-400°C to conduct solvent removal and curing reaction (cure) under vacuum or in a nitrogen atmosphere. Through the imidization thus conducted, a patterned core layer 22 made of a polyimide resin is formed as shown in Fig. 3.

The developing solution for use in the development is not particularly limited. However, for example, an alkaline aqueous solution of an alcohols is used. More specifically, it is preferred to use a mixed aqueous solution of tetramethylammonium hydroxide and ethanol from the standpoints of satisfactory resolution and ease of the regulation of development rate. In this mixed aqueous solution, the proportion of tetramethylammonium hydroxide and that of ethanol are preferably regulated so as to be in the ranges of 2-10% by weight and 40-50% by weight, respectively.

Subsequently, a polyimide resin precursor solution which is a layer-forming material giving a layer having a lower refractive index than the core layer 22 is applied over the core layer 22 in such an amount as to result in a maximum layer thickness after drying of generally 1-30 µm, preferably 5-15 µm, and then dried to thereby form a resin layer comprising a polyimide resin precursor composition, as shown in Fig. 4. This resin layer is subsequently heated in an inert atmosphere to thereby complete removal of the solvent remaining in the resin layer and imidization of the polyimide resin precursor. Thus, an overcladding layer 23 made of a polyimide resin is formed so as to surround the core layer 22. In the manner described above, each optical-waveguide part B is formed.

A plan view of the filmy structure thus produced is as shown in Fig. 5. In this embodiment, the core layer 22 in each optical-waveguide part B has a pattern in which a light which has entered from one side (left side in Fig. 5) is separated so as to be transmitted in difficult three directions (upper rightward, rightward, and lower rightward directions in Fig. 5). Namely, in each optical-waveguide part B, one end face 11 (left end face in Fig. 5) makes, by cutting, a light entrance end face 1 of an optical waveguide A (see Fig. 7), while front end faces 12 to 14 which are the front ends in the different three directions make, by cutting, light emission end faces 2 to 4 of the optical waveguide A (see Fig. 7). Furthermore, those side faces 15 to 18 in each optical-waveguide part B which are located along the pattern of the core layer 22 make, by cutting, waveguide side faces 5 to 8 of the optical waveguide A (see Fig. 7). In producing each optical-waveguide part B, the core layer 22 is formed so as to slightly protrude from the cut surfaces (end face 11 and front end faces 12 to 14).

In the invention, the optical-waveguide parts B are then cut by a specific method. Namely, each optical-waveguide part B in the film structure F is cut along the side faces 15 to 18 by punching with a die to make the waveguide side faces 5 to 8 of an optical waveguide A (see Fig. 7) as shown in Fig. 6. When cutting by punching with a die is thus employed, the optical-waveguide part B can be easily cut out even when the contour of the cut surfaces (waveguide side faces 5 to 8) includes a nonlinear part such as a polygonal line in a plan view thereof. Consequently, high productivity of optical waveguides A can be secured.

Next, each optical-waveguide part B is cut along the end face 11 (left end face in Fig. 6) with a laser light to make the light entrance end face 1 of an optical waveguide A as shown in Fig. 7. Furthermore, the optical-waveguide part B is cut along the front end faces (other end faces) 12 to 14 (see Fig. 6), which are the front ends in the different three directions, with a laser light to make the light emission end faces 2 to 4 of the optical waveguide A. As a result, end parts of the light-transmitting core layer 22 are cut and the light entrance end face 1 and the light emission end faces 2 to 4 have exposed ends of the core layer 22. In the manner described above, optical waveguides A such as those shown in Fig. 8 are obtained. The cutting with a laser light enables the cut surfaces (light entrance end face 1 and light emission end faces 2 to 4) to be neat and have sufficiently improved smoothness (gives highly precise cut surfaces), whereby the optical waveguides A obtained show satisfactory light transmission. Although the laser light is not particularly limited, examples thereof include excimer laser lights. For heightening the precision of processing in cutting, it is preferred to temporarily fix the filmy structure onto a flat stage such as, e.g., a glass substrate or stainless-steel substrate. Examples of methods for this fixing include a method in which the film structure is fixed with a heat-peelable pressure-sensitive adhesive sheet and a method in which the filmy structure is fixed by air suction.

In the embodiment described above, a polyimide resin film is used as the undercladding layer 21 in producing the film structure F. However, a film of another resin such as, e.g., an epoxy resin film may be used in place of the polyimide resin film. In this case, it is preferred that a resin similar in kind to this undercladding layer 21, such as, e.g., a photosensitive epoxy resin, be used as the core layer 22 and a resin similar in kind to that undercladding layer 21, such as, e.g., an epoxy resin, be used as the overcladding layer 23.

Furthermore, when each optical-waveguide part B is cut out in the embodiment described above, the cutting is conducted in such a manner that the faces serving as the waveguide side faces 5 to 8 of an optical waveguide A are made prior to making the face serving as the light entrance end face 1 of the optical waveguide A and the faces serving as the light emission end faces 2 to 4 thereof. However, this order of cutting may be reversed. Namely, cutting may be conducted in such a manner that the face serving as the light entrance end face 1 and the faces serving as the light emission end faces 2 to 4 are made before the faces serving as the waveguide side faces 5 to 8 are made. Moreover, although a film structure F having two or more optical-waveguide parts B is produced in the embodiment described above, the filmy structure may have only one optical-waveguide part B.

Examples of the film optical waveguides A thus obtained include straight optical waveguides, bend optical waveguides, crossing optical waveguides, Y-branched optical waveguides, slab optical waveguides, Mach-Zehnder type optical waveguides, grating optical waveguides, and optical waveguide lenses. Examples of optical devices employing such optical waveguides include wavelength filters, optical switches, optical branch units, optical multiplexers, optical multiplexers/demultiplexers, optical amplifiers, wavelength modulators, wavelength division multiplexers, optical splitters, directional couplers, opto-electric hybrid circuit boards, and optical transmission modules having a laser diode or photodiode hybrid-integrated therewith.

### EXAMPLES

The present invention will be illustrated in greater detail with reference to the following Examples, but the invention should not be construed as being limited thereto.

### EXAMPLE 1

The filmy structure shown in Fig. 5 was produced in the manner shown below and optical waveguides were then produced in the manner shown below.

### Production of Film Structure

A strip-form epoxy resin film (width, 250 mm; length, 30 m; thickness, 30 µm; refractive index, 1.55) for use as an undercladding layer was prepared. A core layer having a predetermined pattern (line width, 50 µm; height, 50 µm; refractive index, 1.62) was formed from a photosensitive epoxy resin in those areas in the resin film in which optical-waveguide parts were to be formed. Subsequently, a liquid epoxy resin was applied over the core layer and then cured to form an overcladding layer (thickness, 30 µm; refractive index, 1.55). Thus, a strip-form filmy structure (thickness, 150 µm) having optical-waveguide parts formed therein was produced.

### Formation of Optical Waveguides

Thereafter, each optical-waveguide part in the film structure was cut along side faces thereof by punching with a die to thereby make waveguide side faces of an optical waveguide. Subsequently, each optical-waveguide part was cut along one end face thereof with a laser light to make a light entrance end face of the optical waveguide, and further cut along the front end faces in the different three directions with a laser light to make light emission end faces of the optical waveguide. Thus, optical waveguides were obtained.

### COMPARATIVE EXAMPLE 1

The same procedure as in Example 1 was conducted, except that the cutting of the optical-waveguide parts in forming optical waveguides was conducted wholly by punching with a die.

### Measurement of Light Loss

The film optical waveguides of Example 1 and Comparative Example 1 thus obtained were examined for light loss at the time when a laser light having a wavelength of 850 nm was caused to enter through the light entrance end face. As a result, the light loss of the optical waveguides of Example 1 and that of the optical waveguides of Comparative Example 1 were found to be 1.5 dB and 30 dB, respectively. Namely, film optical waveguides showing satisfactory light transmission could be obtained in Example 1.

### EXAMPLE 2

### Production of Filmy Structure

A strip-form fluorinated polyimide resin film (width, 250 mm; length, 30 m; thickness, 20 µm; refractive index, 1.51) for use as an undercladding layer was prepared. A core layer having a predetermined pattern (line width, 8 µm; height, 8 µm; refractive index, 1.54) was formed from a photosensitive polyimide resin in those areas in the resin film in which optical-waveguide parts were to be formed. Subsequently, a poly(amic acid) solution (polyimide resin precursor solution) was applied over the core layer and then imidized to form an overcladding layer (thickness, 20 µm; refractive index, 1.51) made of a polyimide resin. Thus, a strip-form film structure (thickness, 48 µm) having optical-waveguide parts formed therein was produced.

### Formation of Optical Waveguides

Optical waveguides were obtained in the same manner as in Example 1.

### COMPARATIVE EXAMPLE 2

The same procedure as in Example 2 was conducted, except that the cutting of the optical-waveguide parts in forming optical waveguides was conducted wholly by punching with a die.

### Measurement of Light Loss

The film optical waveguides of Example 2 and Comparative Example 2 thus obtained were examined for light loss at the time when a laser light having a wavelength of 1,550 nm was caused to enter through the light entrance end face. As a result, the light loss of the optical waveguides of Example 2 and that of the optical waveguides of Comparative Example 2 were found to be 3 dB and 40 dB, respectively. Namely, film optical waveguides showing satisfactory light transmission could be obtained in

### Example 2.

While the present invention has been described in detail and with reference to specific embodiments thereof, it will be apparent to one skilled in the art that various changes and modifications can be made therein without departing from the scope thereof.

This application is based on Japanese Patent Application No. 2004-346499 filed November 30, 2004.

## Claims

1. A process of producing a resinous film optical waveguide from a resinous film structure having one or more optical-waveguide parts formed therein, which process comprises:
cutting each optical-waveguide part out of the resinous film structure to thereby form a resinous optical waveguide having a light entrance end face and a light emission end face,
wherein the cutting for making the light entrance end face and the light emission end face is conducted with a laser light and the cutting for making cut surfaces other than said end faces is conducted by punching with a die.

2. A process according to claim 1, wherein an excimer laser light is used as said laser light.

3. A process according to claim 1 or 2, **characterized by** temporarily fixing said resinous film structure onto a flat stage prior to said cutting with said laser light.

## Patentansprüche

1. Prozess zum Herstellen eines aus Harzfilm bestehenden Lichtwellenleiters aus einer Harzfilmstruktur, in der ein oder mehrere Lichtwellenleiterteile ausgebildet sind, wobei der Prozess umfasst:
Schneiden jedes Lichtwellenleiterteils aus der Harzfilmstruktur, um so einen aus Harz bestehenden Lichtwellenleiter auszubilden, der eine Lichteintritts-Endfläche und eine Lichtemissions-Endfläche aufweist,
wobei das Schneiden zum Erzeugen der Lichteintritts-Endfläche und der Lichtemissions-Endfläche mit einem Laserlicht durchgeführt wird und das Schneiden zum Erzeugen anderer Schnittflächen als die Endflächen durch Stanzen mit einem Werkzeug durchgeführt wird.

2. Prozess nach Anspruch 1, wobei ein Excimer-Laserlicht als das Laserlicht verwendet wird.

3. Prozess nach Anspruch 1 oder 2, **gekennzeichnet durch** temporäres Fixieren der Hauptfilmstruktur auf einem flachen Tisch vor dem Schneiden mit dem Laserlicht.

## Revendications

1. Processus de production d'un guide d'ondes optiques en film de résine à partir d'une structure de film de résine ayant une ou plusieurs partie(s) de guides d'ondes optiques formée(s) dessus, ledit processus comprenant :
la découpe de chaque partie de guide d'ondes optiques à partir de la structure de film de résine de façon à former un guide d'ondes optiques résineux ayant une face d'entrée de la lumière et une face d'émission de lumière,
dans lequel la découpe permettant de créer la face d'entrée de la lumière et la face d'émission de lumière est effectuée avec une lumière laser, et la découpe permettant de créer des surfaces de découpe autres que lesdites faces est effectuée par poinçonnage avec une matrice.

2. Processus selon la revendication 1, dans lequel une lumière de laser à excimère est utilisée comme ladite lumière laser.

3. Processus selon la revendication 1 ou 2, **caractérisé par** la fixation temporaire de ladite structure de film de résine sur une surface plane avant ladite découpe avec ladite lumière laser.
